# FASCICULE DE BREVET EUROPEEN

(11) **EP 3 066 440 B1**
(45) Date de publication et mention de la délivrance du brevet: **01.04.2020**
(21) Numéro de dépôt: 14799015.4
(22) Date de dépôt: 05.11.2014
(51) Int. Cl.: G01K 17/00, G01K 17/04

(54) **CALORIMÈTRE A TEMPÉRATURE STABILISÉE**
KALORIMETER MIT STABILISIERTER TEMPERATUR
CALORIMETER WITH STABILISED TEMPERATURE

(30) Priorité: 07.11.2013 FR 1360897
(43) Date de publication de la demande: 14.09.2016
(73) Titulaire: Centre National de la Recherche Scientifique, 75016 Paris (FR)
(72) Inventeur: GARDEN, Jean-Luc, F-38130 Echirolles (FR); BROSSE-MARON, Pierre, F-38660 La Terrasse (FR); MOIROUX, Gaël, F-38000 Grenoble (FR)
(74) Mandataire: IPAZ
(86) Numéro de dépôt international: PCT/IB2014/065825
(87) Numéro de publication internationale: WO 2015/068115

(56) Documents cités:
- INABA H: "Nano-watt stabilized DSC and ITS applications", JOURNAL OF THERMAL ANALYSIS AND CALORIMETRY, KLUWER ACADEMIC PUBLISHERS, DORDRECHT, NL, vol. 79, no. 3, 1 février 2005 (2005-02-01), pages 605-613, XP019255413, ISSN: 1572-8943 cité dans la demande

## Description

L'invention concerne le domaine de la calorimétrie et, plus particulièrement, un calorimètre à température stabilisée, performant et conçu pour des échantillons de faible volume.

On connaît déjà de nombreux calorimètres qui ont tous pour objectif de mesurer lles quantités de chaleur mises en jeu lors d'une réaction chaque ou d'une transformation de la matière.

En effet, par exemple lors d'une transformation physique, telle qu'une transition de phase, un échange de chaleur se produit entre la matière et l'environnement extérieur, dont le sens dépend de la nature endothermique ou exothermique du processus de transition.

En conséquence, la mesure des quantités de chaleur permet d'accéder à des informations sur l'état structural de la matière. C'est pourquoi les calorimètres sont utilisés dans de nombreux domaines scientifiques, en particulier la physique et la chimie, et donc dans l'industrie,

Sont notamment concernées la métallurgie, pour l'étude des réactions d'oxydoréduction et des transitions thermiques, la chimie des polymères ou encore la biochimie et l'industrie agroalimentaire,

En particulier, en biophysique, la calorimétrie est la seule méthode qui permette d'accéder de manière directe à des données thermodynamiques (stabilité thermodynamique, énergie libre, entropie, etc...) et la présente demande de brevet s'intéresse à la calorimétrie différentielle à balayage.

Cette technique d'analyse consiste a mesurer les différences des échanges de chaleur entre un échantillon à analyser et une référence.

Une mesure différentielle présente l'avantage d'éliminer la majeure partie des dérives thermiques dues à l'environnement, sans ajouter de bruit au système. Ainsi, elle permet de détecter uniquement le signal induit par la transformation thermodynamique à étudier.

A titre d'exemple, dans le domaine des sciences du vivant, pour étudier l'évolution thermodynamique d'une protéine, deux cellules identiques sont réalisées, ces cellules étant combinées à l'environnement de façon thermiquement équivalente. L'une d'elle est remplieavec un volume de solution tampon, constituant la référence, l'autre étant remplie avec une solution comprenant la solution tampon et la protéine, constituant l'échantillon.

En pratique, les deux cellules sont placées dans un four dont la température évolue de façon déterminée, généralement selon des rampes. Celle-ci va entraîner une transformation physique de l'échantillon et donc un flux de chaleur échangé entre l'échantillon et le four. Une mesure différentielle entre les deux cellules de mesure permet de déterminer la différence de flux de chaleur entre l'échantillon et la référence et d'obtenir donc directement le signal utile engendré par la protéine.

Les appareils connus utilisent généralement la technique de calorimétrie différentielle à balayage ou DSC (« *Differential Scanning Calorimètry »* dans la terminologie anglaise) dans laquelle est prévu un étalonnage préalable à la mesure et un balayage d'un gaz inerte pour éviter toute réaction de l'échantillon avec l'atmosphère du four.

Ces appareils ont longtemps apporté satisfaction car ils permettent non seulement de mesurer la quantité de chaleur absorbée ou libérée au cours d'une transition de phase mais également d'observer des changements de phase plus compliqués, comme les transitions vitreuses.

On peut notamment citer les calorimètres commercialisés par les sociétés Setaram, Mettler Toledo, Netzsch, TA instruments ou MicroCal pour les plus importantes, avec uniquement des calorimètres DSC dédiés aux sciences du vivant chez TA instruments ou MicroCal.

Ces derniers présentent cependant des inconvénients qui tiennent notamment au volume minimum de l'échantillon, nécessaire pour que le capteur puisse réaliser une mesure. En effet, bien que le volume dans la zone de mesure ne soit que de quelques centaines de microlitres, le volume minimum est de l'ordre du millilitre, pour tenir compte à la fois du volume de la cellule de mesure et du volume minimum nécessaire à l'amenée du produit dans la cellule.

Ce volume minimum se révèle prohibitif dans le domaine des sciences du vivant ou dans le domaine pharmaceutique, dans lesquels les échantillons à étudier sont disponibles en très faibles quantités, notamment du fait du coût de leur synthèse. De plus, il est préférable que la concentration de molécules d'échantillon soit relativement faible, de façon à limiter les problèmes d'interaction biochimique et d'agrégation.

La société Mettler Toledo a récemment commercialisé un calorimètre de type DSC pouvant travailler avec des quantités infimes d'échantillons et des vitesses de scan allant jusqu'à 10⁵ K/s, mais ces instruments sont uniquement adaptés à des mesures sur des échantillons solides.

Le document FR-2 977 034 décrit un capteur de mesure calorimétrique différentielle permettant de réaliser des mesures sur des échantillons liquides ou solides, présentant un volume de l'ordre du microlitre, Son utilisation contribue à pallier les inconvénients des calorimètres connus.

Cependant, pour cela, il est de plus nécessaire que le calorimètre fournisse, à un tel capteur, un environnement thermique à très haute stabilité.

En d'autres termes, pour réaliser des mesures nanocalorimétriques sur des volumes d'échantillons de l'ordre du microlitre, il convient que le calorimètre permette d'obtenir, au niveau du capteur, une stabilité en température de l'ordre de quelques dizaines de microkelvins en mode de rampe ou en mode isotherme.

A défaut, le signal utile délivré par le capteur est trop faible par rapport au bruit et la mesure n'est pas significative.

Or, si les calorimètres connus fournissent un environnement thermique stable aux capteurs qu'ils contiennent, cette stabilité est de l'ordre de quelques millikelvins.

On peut notamment citer les appareils commercialisés sous la dénomination Micro-DSC III par la société Sétaram ou sous la dénomination Nano-DSC pour TA Instruments.

L'appareil Micro-DSC III assure une stabilité de la mesure au maximum de l'ordre de 0,5 mK pic à pic. Il convient donc bien à des échantillons dont le volume est de l'ordre du millilitre mais non du microlitre.

L'appareil de TA instruments assure quant à lui un environnement thermique stable pour des échantillons d'un volume minimal de l'ordre de 300 µl.

Des travaux ont déjà été réalisés pour mettre au point des calorimètres fournissant un environnement thermique plus stable.

On peut notamment citer l'article de Wang et Al. « Nano-watt stabilized DSC and its applications » (Journal of thermal Analysis and Calorimetry, Vol. 79 (2005) 605-613),

Cet article décrit un calorimètre DSC à haute sensibilité et à haute résolution qui comprend une série d'enceintes régulées en température et emboîtées les unes dans les autres.

Ce calorimètre permet d'assurer une stabilité thermique de l'ordre de 2 mK pic à pic pour la deuxième enceinte ou de 0,2 mK pic à pic pour la troisième enceinte située dans la deuxième. La stabilité thermique est donc améliorée par rapport à celles des appareils commercialisés à ce jour. Cependant, elle ne permet toujours pas d'analyser correctement des échantillons dont le volume est de l'ordre du microlitre.

L'invention a pour objet de pallier ces inconvénients en proposant un calorimètre performant, fournissant un environnement thermique à très haute stabilité et notamment destiné à des capteurs conçus pour analyser des échantillons solides ou liquides dont le volume est très faible, c'est-à-dire de l'ordre du microlitre.

Ainsi, l'invention concerne un calorimètre comprenant au moins un capteur de mesure, destiné à recevoir au moins un échantillon, et au moins trois étages de régulation de la température, de taille décroissante, comprenant chacun un support et des moyens de régulation de la température, l'étage de plus faible taille étant associé audit au moins un capteur, dans lequel :
- un premier étage comprend également un écran formant une première enceinte avec le support de ce premier étage, ce dernier étant destiné à être placé dans l'environnement extérieur du calorimètre dont il est découplé thermiquement, et les moyens de régulation de la température de ce premier étage permettant d'isoler l'intérieur de la première enceinte des variations de température dudit environnement extérieur,
- un deuxième étage est placé dans ladite première enceinte et son support est couplé thermiquement au support du premier étage par des premières conductances thermiques consistant en des éléments à effet Peltier et
- un troisième étage est placé à l'intérieur de la deuxième enceinte définie par ledit deuxième étage couplé thermiquement audit deuxième étage par des deuxièmes conductances thermiques passives définissant une valeur adaptée de constante de temps, les moyens de régulation de la température de ce troisième étage permettant d'obtenir des valeurs de température nécessaires à l'obtention de mesures par ledit au moins un capteur, dans lequel les deuxièmes conductances thermiques définissent une constante de temps comprise entre dix et plusieurs centaines de secondes, par exemple de l'ordre d'une centaine de secondes.

De façon préférée, les premières conductances thermiques sont des éléments à effet Peltier de haute puissance et constituent des moyens de régulation thermique du deuxième étage.

Dans une variante de réalisation, entre le support du premier étage et celui du deuxième étage, est placé un premier autre étage, découplé thermiquement dudit premier étage.

Dans une autre variante de réalisation du calorimètre selon l'invention, entre les deuxième et troisième étages est placé un deuxième autre étage.

Dans ce cas, le couplage au moyen des deuxièmes conductances thermiques est réalisé entre le deuxième étage et ledit deuxième autre étage ou entre le troisième étage et le deuxième autre étage.

Dans cette même autre variante, sont prévus des troisièmes conductances thermiques qui, suivant le cas, sont prévues entre le deuxième autre étage et le troisième étage ou entre le deuxième autre étage et le deuxième étage.

Ces troisièmes conductances thermiques définissent une puissance constante dont la valeur est choisie en fonction du type d'échantillons à analyser.

Il s'agit par exemple d'éléments à effet Peltier définissant une source froide pour le support du deuxième autre étage ou le support du troisième étage.

Dans un mode préféré de réalisation, le deuxième étage comprend également un écran formant une deuxième enceinte avec le support de ce deuxième étage, dans laquelle est placé ledit troisième étage et éventuellement ledit deuxième autre étage.

Dans un autre mode de réalisation du calorimètre, le troisième étage comprend également un écran formant une autre enceinte avec le support de ce troisième étage, dans laquelle est placé ledit au moins un capteur.

Dans un autre mode de réalisation, ledit premier autre étage comprend un support associé à un écran, formant une enceinte dans laquelle sont placés le deuxième étage, le troisième étage et éventuellement le deuxième autre étage.

Dans encore un autre mode préféré de réalisation du calorimètre, ledit deuxième autre étage est associé à un écran formant une troisième enceinte dans laquelle ledit troisième étage est placé,

Les moyens de régulation en température dudit premier étage sont avantageusement constitués par un bain à circulation de fluide, notamment de l'eau.

Les moyens de régulation en température du premier autre étage sont avantageusement constitués par un bain à circulation de fluide, notamment du type huile silicone.

Enfin, tout le volume à l'intérieur de la première enceinte est sous vide.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation du calorimètre selon l'invention et sur lesquels :
- la figure 1 est une vue en coupe d'un premier exemple de réalisation du calorimètre selon l'invention,
- la figure 2 est une vue en coupe similaire à la figure 1 et représentant une première variante de réalisation du calorimètre selon l'invention,
- la figure 3 est une vue en coupe similaire à la figure 1 et représentant une deuxième variante de réalisation du calorimètre selon l'invention,
- la figure 4 est une vue en coupe similaire à la figure 1 et représentant une troisième variante de réalisation du calorimètre selon l'invention,
- la figure 5 comprend les figures 5a et 5b, la figure 5a étant une courbe expérimentale représentant la variation en température en fonction du temps au niveau du deuxième étage de la deuxième variante de réalisation illustrée à la figure 3, et la figure 5b étant une courbe identique à la figure 5a mais avec une échelle agrandie d'un facteur 10,
- la figure 6 comprend les figures 6a et 6b, la figure 6a étant une courbe expérimentale représentant la variation en température en fonction du temps au niveau du troisième étage de la deuxième variante de réalisation illustrée à la figure 3, et la figure 6b étant une courbe identique à la figure 6a mais avec une échelle agrandie d'un facteur 10, et
- la figure 7 est une courbe expérimentale concernant un échantillon de protéine alpha-lactalbumine placé dans le calorimètre selon l'invention et représente la puissance dégagée par l'échantillon en fonction de la température.

Les éléments communs aux différentes figures seront illustrés par les mêmes références.

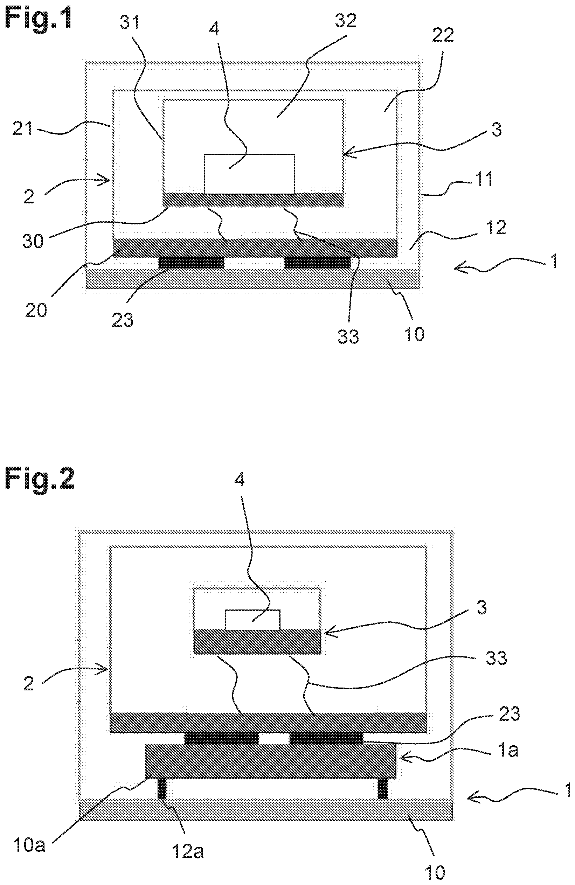

La figure 1 représente un calorimètre selon l'invention qui comprend trois étages de régulation de la température.

Le premier étage 1 comprend un support 10 et un écran 11.

Il définit donc une enceinte, dans laquelle sont disposés les autres étages de régulation de la température.

Ce premier étage est en contact avec l'environnement extérieur du calorimètre. Sa première fonction est donc d'isoler l'intérieur 12 de l'enceinte des variations de température de cet environnement.

En pratique, l'écran 11 est réalisé en un matériau présentant une très bonne conductivité thermique. Il est régulé en température par l'intermédiaire du support 10 auquel il est couplé thermiquement. La paroi extérieure de l'écran et du support est recouverte d'un isolant thermique pour assurer un découplage thermique entre le premier étage et l'environnement extérieur.

Par ailleurs, l'enceinte définie par le support et l'écran est étanche. Elle peut donc être reliée à un dispositif de pompage pour établir un vide secondaire à l'intérieur 12 de l'enceinte, c'est-à-dire une pression comprise entre 10⁻³ et 10⁻⁷ mbar ou entre 10⁻¹ et 10⁻⁵ Pa.

Le fait de mettre l'enceinte sous vide permet d'annuler les liens thermiques par conduction et par convection entre les différents étages à l'intérieur de l'enceinte définie par le premier étage, et aussi entre le premier étage et les autres. Le seul couplage thermique parasite est alors le rayonnement thermique dont le calorimètre selon l'invention permet de s'affranchir.

En pratique, les enceintes présentes à l'intérieur de cette première enceinte sont également sous vide.

Le support 10 est constitué d'une plaque de métal présentant une bonne conductivité thermique et une bonne diffusivité thermique.

Ce métal peut notamment être de l'aluminium.

Des moyens de régulation en température sont associés au support 10. Ces moyens de régulation sont avantageusement constitués par un bain à circulation de fluide, notamment de l'eau (non représenté sur la figure 1), associé à un thermomètre.

Ils permettent d'isoler l'intérieur de la première enceinte des variations de température de l'environnement extérieur et ainsi de stabiliser en température tout le volume à l'intérieur de la première enceinte.

Des moyens de ce type sont conçus pour réguler la température à quelques dizaines de millikelvins près.

Le calorimètre selon l'invention comprend un deuxième étage de régulation 2, placé à l'intérieur 12 de la première enceinte.

Dans l'exemple illustré sur la figure 1, le deuxième étage 2 comprend un support 20 et un écran 21 qui définissent une deuxième enceinte.

Cependant, l'écran 21 pourrait être omis.

Le support 20 du deuxième étage consiste en une plaque d'un matériau qui est un très bon conducteur de la chaleur,

Il peut notamment être réalisé en cuivre, comme l'écran 21.

Le deuxième étage est couplé thermiquement au premier étage par l'intermédiaire de conductances thermiques 23.

Ces conductances thermiques peuvent consister en des fuites thermiques associées à des moyens de régulation consistant par exemple en des moyens de chauffage associés à un thermomètre ou un bain à circulation de fluide associé à un thermomètre.

Ces fuites thermiques peuvent par exemple être constituées par des supports mécaniques, la géométrie des supports et la valeur de la conductivité thermique du matériau utilisé définissant une conductance thermique de valeur adaptée.

Ces conductances thermiques peuvent également consister en des éléments à effet Peltier de grande puissance qui remplissent aussi la fonction de moyens de régulation en température de ce deuxième étage. Par éléments à effet Peltier de grande puissance, on comprend un ou plusieurs éléments à effet Peltier ayant une puissance froide nécessaire pour absorber toute la puissance thermique qui provient des étages imbriqués dans l'étage 1, Un ordre de grandeur pourrait être de plusieurs centaines de watt jusqu'à un kilowatt.

Les éléments à effet Peltier sont associés à un thermomètre.

Ils définissent une constante de temps comprise entre 100 et 1000 s.

Des éléments de ce type sont conçus pour réguler la température de quelques miilikelvins à quelques dizaines de millikelvins près.

Il est avantageux de prévoir des éléments à effet Peltier pour réguler la température du deuxième étage. En effet, ces éléments permettent d'abaisser considérablement la température du support 20, la température pouvant être inférieure à O°C.

Ceci permet d'obtenir une température basse également au niveau du support 30.

De façon générale, la face froide des éléments à effet Peltier 23 est en contact avec le support 20 et la face chaude est en contact avec le support 10, Le courant alimentant les éléments 23 est ajusté en fonction de la température du deuxième étage 2, afin de réguler de façon appropriée la température de ce deuxième étage 2.

Les éléments à effet Peltier 23 ont également pour fonction d'absorber les puissances de régulation du ou des étage(s)de régulation placé(s) à l'intérieur 22 de l'enceinte définie par ce deuxième étage.

Enfin, le calorimètre selon l'invention comprend un troisième étage 3 qui est placé à l'intérieur 22 de l'enceinte définie par le deuxième étage.

Ce troisième étage 3 comprend un support 30 et un écran 31 qui définissent une troisième enceinte. A l'intérieur 32 de cette troisième enceinte est placé un capteur 4 de mesure calorimétrique différentielle, par exemple du type décrit dans le document FR-2 977 034.

L'invention n'est pas limitée à cette application.

L'enceinte pourrait notamment comprendre plusieurs capteurs de mesure différentielle, un capteur avec au moins deux thermomètres ou encore un capteur non-différentiel avec un seul thermomètre,

Le support 30 et l'écran 31 sont réalisés en un matériau qui est un très bon conducteur de la chaleur, notamment du cuivre.

L'écran 31 pourrait être omis.

Ce troisième étage 3 est régulé en température par des moyens de chauffage (non représentés sur la figure 1). Ces moyens de chauffage permettent d'établir les niveaux de température nécessaires au bon fonctionnement du capteur 4.

Ainsi, ces moyens peuvent créer une rampe de température, par exemple comprise entre 0,01°C/min et 100°C/min, ou encore établir un mode isotherme.

Il convient d'indiquer ici que le capteur décrit dans le document FR 2 977 034 fonctionne bien avec des rampes de température rapides.

Lorsque les éléments 23 sont des éléments à effet Peltier à haute puissance, la température du support 30 peut être inférieure à 0°C, notamment comprise entre -50°C et 0°C.

Ceci permet de disposer d'une plus grande plage de températures pour fixer la température de départ de la rampe de température qui sera appliquée au niveau du troisième étage,

Par ailleurs, ce troisième étage 3 est couplé thermiquement au deuxième étage 2, par l'intermédiaire de conductances thermiques 33.

Ces conductances sont choisies de façon appropriée pour définir une constante de temps comprise entre 10 s et plusieurs centaines de secondes. En pratique, cette constante de temps est choisie pour être relativement élevée, par exemple de l'ordre de 100 secondes.

Contrairement aux éléments à effet Peltier, ces conductances thermiques 33 sont passives, c'est-à-dire qu'elles ne peuvent pas être utilisées pour réguler la température du troisième étage.

Elles peuvent notamment présenter la forme d'un U et être réalisées en cuivre recuit.

Il convient de noter que ces conductances thermiques ne contribuent pas à la rigidité mécanique de l'ensemble car elles sont souples.

Ainsi, ces conductances thermiques 33 permettent de créer une isolation thermique très efficace entre le deuxième étage et le troisième étage, ce dernier pouvant ainsi être régulé à quelques 0,01 mK près.

En pratique, ceci permet de créer un gradient thermique entre le deuxième étage et le troisième étage, typiquement de l'ordre de 1°C, grâce à des moyens de chauffage spécifiques prévus au niveau du support 30. Ils sont conçus pour fournir une puissance P telle que P = KΔT. où K est la valeur des conductances thermiques 33 et ΔT, le gradient de température.

L'association de ces trois étages de régulation permet d'obtenir une stabilité en température de l'ordre de quelques microkelvins à l'intérieur de l'enceinte renfermant le capteur de mesure calorimétrique différentielle.

Ce résultat est notamment dû à la présence des conductances thermiques 33 entre le deuxième étage 2 et le troisième étage 3, ces conductances thermiques assurant une très forte isolation du troisième étage par rapport aux perturbations thermiques extérieures.

La figure 2 représente une variante de réalisation du calorimètre selon l'invention.

La figure 2 montre qu'un premier autre étage de régulation de température 1a est disposé entre le premier étage 1 et le deuxième étage 2.

Cet étage 1a permet de mieux isoler le deuxième étage 2 de l'environnement extérieur.

Cet étage 1a comprend un support 10a qui est relié mécaniquement au support 10, par exemple par des tiges 12a.

La connexion mécanique est conçue pour éviter tout couplage thermique entre les supports 10 et 10a. Pour cela, les tiges peuvent notamment être réalisées en inox ou en plastique.

Ce support 10a est également constitué par une plaque de métal présentant une très bonne conductivité thermique, notamment du cuivre.

Ce support 10a est régulé thermiquement par un bain à circulation de fluide, notamment de l'huile silicone (non représenté sur la figure 2), Ceci permet de réguler le support 10a à des températures inférieures à 0°C,

Comme indiqué précédemment, des moyens de ce type sont conçus pour réguler la température à quelques dizaines de millikelvins près.

Un écran (non représenté sur la figure 2) pourrait être associé au support 10a. Il est alors réalisé en un matériau présentant une très bonne conductivité thermique.

Cet autre étage 1a est découplé thermiquement du premier étage 1, les moyens de régulation en température du premier étage 1 et de l'étage 1a étant indépendants l'un de l'autre et les supports 10 et 10a étant reliés mécaniquement sans couplage thermique,

La figure 2 montre que, dans cette variante de réalisation, c'est l'étage 1a qui sert de bain thermique aux éléments 23.

En d'autres termes, cet autre étage 1a constitue une référence thermique pour le deuxième étage 2 et ce, à une température stable.

Cette température de référence est par exemple inférieure à 0°C.

Le deuxième étage 2 et le troisième étage 3 présentent la même structure que celle décrite en référence à la figure 1. Ils ne seront donc pas décrits plus en détail.

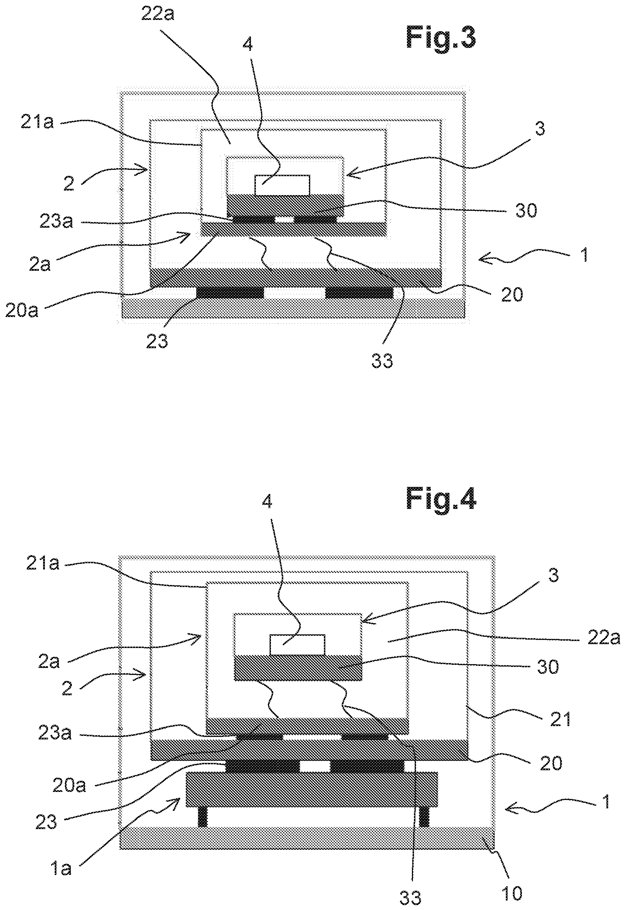

La figure 3 illustre une autre variante de réalisation du calorimètre décrit à la figure 1.

Comme le montre la figure 3, le premier étage 1 et le deuxième étage 2 présentent la même structure que celle qui est a été décrite en référence à la figure 1. Ces deux étages ne seront donc pas décrits de nouveau en détail.

Dans la variante illustrée, un deuxième autre étage de régulation 2a est prévu entre le deuxième étage 2 et le troisième étage 3.

Cet autre étage 2a comprend un support 20a et un écran 21a définissant une enceinte,

Là encore, le support 20a et l'écran 21a sont réalisés en un matériau qui est un très bon conducteur de chaleur. Il peut notamment s'agir de cuivre.

A l'intérieur 22a de cette enceinte est placé le troisième étage 3 qui contient le capteur 4.

En pratique, l'écran 21a pourrait être omis,

Ainsi, dans cette variante, les conductances thermiques 33 ne sont pas situées entre le support 20 du deuxième étage et le support 30 du troisième étage, mais entre le support 20a de l'étage supplémentaire 2a et le support 20 du deuxième étage 2.

Ces conductances thermiques 33 remplissent la même fonction que précédemment, c'est-à-dire définir une constante de temps comprise entre 10 s et plusieurs centaines de secondes et notamment de l'ordre de la centaine de secondes. Ceci permet de réaliser une isolation thermique très efficace entre le deuxième étage 2 et l'étage supplémentaire 2a. Il est alors possible de réguler de manière très précise la température de l'étage complémentaire 2a, grâce aux moyens de régulation qui lui sont associés (non représentés sur la figure 3).

Par ailleurs, entre le support 20a et le support 30 du troisième étage, sont prévues des conductances thermiques 23a, constituées ici par des éléments à effet Peltier,

Ces éléments 23a permettent de fournir une puissance constante au niveau du troisième étage 3, ce qui permet de définir une température moyenne avant qu'une mesure soit réalisée par le capteur 4.

Ils permettent également de définir une constante de temps adaptée, comprise entre 100 et 1000 s.

En pratique, ces éléments à effet Peltier 23a peuvent être alimentés en courant de façon à définir une température moyenne de départ d'expérience qui est négative, notamment comprise entre -30°C et 0°C.

Les éléments à effet Peltier pourraient être utilisés pour réguler la température du troisième étage.

Cependant, dans le cadre de l'invention, il apparaît avantageux de ne pas utiliser ces éléments à effet Peltier pour réguler la température du troisième étage 3.

La régulation de ce troisième étage est alors effectuée au moyen d'éléments de chauffage et d'un thermomètre.

Le support 20a est relié mécaniquement au support 20 par l'intermédiaire de rondelles Belleville (non représentées sur la figure 3).

Ces rondelles permettent d'assurer une force mécanique constante sur les éléments à effet Peltier 23 sans coupler thermiquement les supports 20a et 20 car elles ne sont pas conductrices de la chaleur.

Bien entendu, le calorimètre illustré à la figure 3 pourrait également être modifié pour inclure la variante illustrée à la figure 2,

La figure 4 illustre encore une autre variante du calorimètre illustré à la figure 1.

Ce calorimètre présente la variante de réalisation illustrée à la figure 2. En effet, un étage complémentaire 18 est prévu entre le premier étage 1 et le premier étage 2.

Ces trois étages 1, 1a et 2 présentent la même structure que celle qui a été décrite en référence aux figures 1 et 2 et ils ne seront donc pas décrits plus en détail,

La figure 4 montre que le calorimètre inclut un autre étage supplémentaire 2a, tel qu'il a été décrit en référence à la figure 3.

Cependant, dans cette variante de réalisation, les conductances thermiques 33 sont prévues entre l'étage complémentaire 2a et le troisième étage 3 et non entre l'étage complémentaire 2a et le deuxième étage 2. Elles remplissent cependant la même fonction que celle qui a été décrite en référence à la figure 3.

Par ailleurs, les éléments à effet Peltier 23a sont prévus entre le support 20a et le support 20 du deuxième étage et non entre le support 30 du troisième étage et le support 20a de l'étage complémentaire 2a, comme sur la figure 3.

Ainsi, le calorimètre selon l'invention est constitué de plusieurs étages de régulation de la température qui sont emboîtés les uns dans les autres. Il s'agit donc d'une configuration du type « poupées russes ».

De façon générale, lorsqu'un écran est associé à un support, il est avantageux qu'il soit parfaitement couplé à ce support pour assurer une température homogène dans l'enceinte ainsi définie.

Chaque étage de régulation permet d'atténuer d'un facteur donné les variations de température de la pièce dans laquelle est placé le calorimètre.

Dans un tel système, l'environnement immédiat d'un étage est défini par l'étage qui le supporte ou le contient.

Par ailleurs, les régulations de chaque étage sont indépendantes les unes des autres et ne perturbent pas leur environnement immédiat.

En pratique, chaque étage de régulation permet d'atténuer d'un facteur 10 à 100 les variations de son environnement immédiat.

Notamment grâce à la présence des conductances thermiques 33, le calorimètre selon l'invention assure une stabilité en température de l'ordre de 10⁻⁵ K au niveau du capteur de mesure 4.

Ainsi, le calorimètre selon l'invention permet d'améliorer la stabilité en température d'un facteur compris entre 10 et 100, par rapport aux appareils connus.

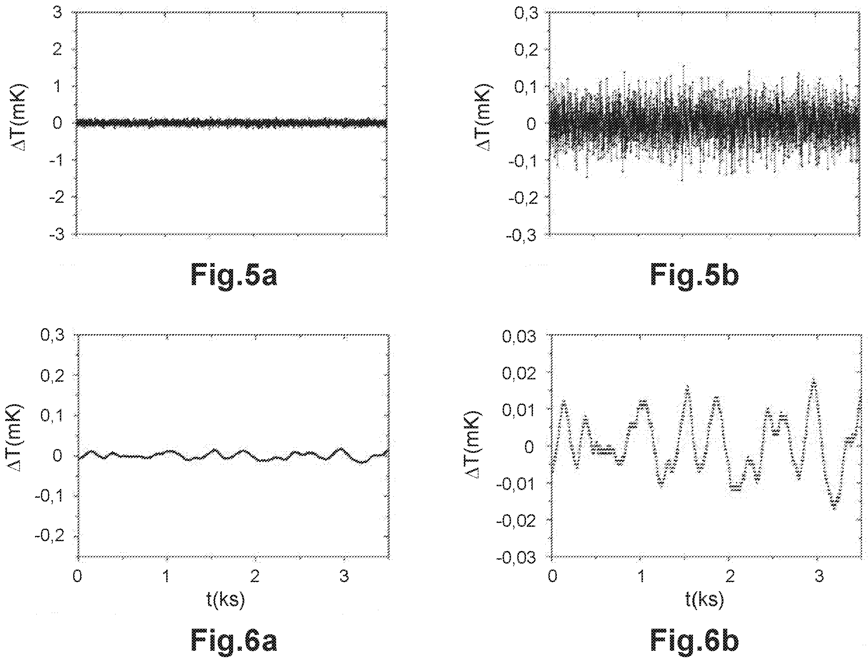

Ceci apparaît notamment des figures 5 et 6 qui montrent la régulation en température en fonction du temps des étages 2a et 3 du calorimètre illustré à la figure 3, ces deux étages étant régulés autour d'une température constante.

La figure 5 montre que la fluctuation en température au niveau de l'étage 2a et de ± 0,1 mK, tandis que la figure 6 montre que la fluctuation en température est de ± 0,01 mK au niveau de l'étage 3.

Le calorimètre selon l'invention permet donc d'améliorer la stabilité en température d'un facteur 10 par rapport au calorimètre décrit dans l'article de Wang précité.

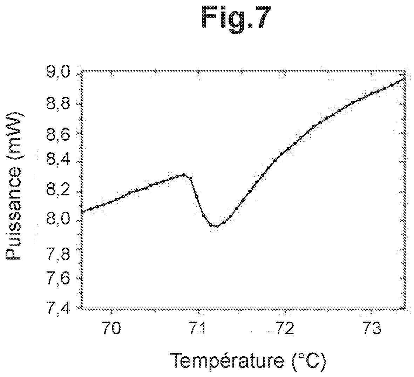

Il permet donc de réaliser des mesures sur des échantillons dont le volume est de l'ordre du microlitre, en utilisant un capteur de mesure approprié, même pour des matériaux émettant de faibles signaux
Ceci ressort de la figure 7 qui est un essai de dénaturation thermique d'une protéine alpha-lactalbumine,

Un échantillon de cette protéine a fait l'objet d'une mesure de température différentielle dans un calorimètre selon l'invention, tel qu'illustré à la figure 3.

Cet échantillon présentait une masse de protéines de 20 µg diluée dans un solvant pour obtenir un volume de 2µl. Sa concentration en protéines est donc de 10 mg/ml. Il a été soumis, comme la référence, à une rampe de température de 5°C/min.

Le calorimètre a permis de mesurer, en fonction du temps, une température différentielle dont est déduite une puissance (mW) illustrée sur la figure 7.

La courbe illustrée à la figure 7 montre qu'à une température de 71°, la protéine considérée se dénature.

Le calorimètre selon l'invention permet donc bien de réaliser des mesures avec des échantillons de très faible volume, même avec des produits émettant de faibles signaux, comme des matériaux biologiques.

Il convient de souligner que, dans l'article de Wang précité, le matériau testé n'est pas un échantillon biologique.

Ceci s'avère particulièrement intéressant dans le domaine de la biophysique et des sciences de la vie où les écarts de température à mesurer sont infimes.

Les signes de référence insérés après les caractéristiques techniques figurant dans les revendications ont pour seul objet de faciliter la compréhension de ces dernières et ne sauraient en limiter la portée.

## Revendications

1. Calorimètre comprenant au moins un capteur (4) de mesure, destiné à recevoir au moins un échantillon, et au moins trois étages (1, 2, 3) de régulation de la température, de taille décroissante, comprenant chacun un support (10, 20, 30) et des moyens de régulation de la température, l'étage de plus faible taille étant associé audit au moins un capteur (4), dans lequel :
- un premier étage (1) comprend également un écran (11) formant une première enceinte avec le support (10) de ce premier étage, ce dernier étant destiné à être placé dans l'environnement extérieur du calorimètre dont il est découplé thermiquement, et les moyens de régulation de la température de ce premier étage permettant d'isoler l'intérieur (12) de la première enceinte des variations de température dudit environnement extérieur,
- un deuxième étage (2) est placé à l'intérieur (12) de ladite première enceinte et son support (20) est couplé thermiquement au support (10) du premier étage par des premières conductances thermiques (23) consistant en des éléments à effet Peltier,
- un troisième étage (3) est placé à l'intérieur de la deuxième enceinte définie par le deuxième étage et est couplé thermiquement audit deuxième étage (2) par des deuxièmes conductances thermiques (33), lesquelles sont passives et définissent une valeur adaptée de constante de temps, les moyens de régulation de la température de ce troisième étage permettant d'obtenir des valeurs de température nécessaires à l'obtention de mesures par ledit au moins un capteur,
dans lequel les deuxièmes conductances thermiques définissent une constante de temps comprise entre dix secondes et plusieurs centaines de secondes, par exemple de l'ordre d'une centaine de secondes.

2. Calorimètre selon la revendication 1, dans lequel les premières conductances thermiques (23) sont des éléments à effet Peltier de haute puissance et constituent des moyens de régulation de la température du deuxième étage (2).

3. Calorimètre selon la revendication 1 ou 2, dans lequel, entre le support (10) du premier étage et le support (20) du deuxième étage, est placé un premier autre étage (1a), découplé thermiquement dudit premier étage.

4. Calorimètre selon l'une des revendications 1 à 3, dans lequel entre les deuxième et troisième étages (2, 3) est placé un deuxième autre étage (2a).

5. Calorimètre selon la revendication 4, dans lequel les deuxièmes conductances thermiques (33) sont placées entre le support (20) du deuxième étage et le support (20a) du deuxième autre étage (2), des troisièmes conductances thermiques (23a) étant prévues entre le support (20a) du deuxième autre étage (2a) et le support (30) du troisième étage (3).

6. Calorimètre selon la revendication 4, dans lequel les deuxièmes conductances thermiques (33) sont placées entre le support (20a) du deuxième autre étage (2a) et le support (30) du troisième étage (3), des troisièmes conductances thermiques (23a) étant prévues entre le support (20) du deuxième étage (2) et le support (20a) du deuxième autre étage (2a).

7. Calorimètre selon la revendication 5 ou 6, dans lequel les troisièmes conductances thermiques (23a) définissent une puissance constante, dont la valeur est choisie en fonction du type d'échantillons à analyser.

8. Calorimètre selon la revendication 7, dans lequel lesdites troisièmes conductances thermiques (23a) sont des éléments à effet Peltier définissant une source froide pour le support (20a) ou le support (30).

9. Calorimètre selon l'une des revendications 1 à 8, dans lequel le deuxième étage (2) comprend également un écran (21) formant une deuxième enceinte avec le support (20) de ce deuxième étage, à l'intérieur (22) de laquelle est placé ledit troisième étage (3) et éventuellement ledit deuxième autre étage (2a).

10. Calorimètre selon les revendications 1 à 9, dans lequel ledit troisième étage comprend également un écran (31) formant une autre enceinte avec le support (30) de ce troisième étage, à l'intérieur (32) de laquelle est placé ledit au moins un capteur (4).

11. Calorimètre selon les revendications 3 à 10, dans lequel ledit premier autre étage (1a) comprend un support (10a) associé à un écran, formant une enceinte dans laquelle sont placés le deuxième étage et le troisième étage et éventuellement ledit deuxième autre étage.

12. Calorimètre selon l'une des revendications 4 à 11, dans lequel ledit deuxième autre étage (2a) est associé à un écran (21a) formant une troisième enceinte à l'intérieur (22a) de laquelle ledit troisième étage (3) est placé.

13. Calorimètre selon l'une des revendications 1 à 12, dans lequel les moyens de régulation en température dudit premier étage (1) sont constitués par un bain à circulation de fluide, notamment de l'eau.

14. Calorimètre selon l'une des revendications 3 à 13, dans lequel les moyens de régulation en température du premier autre étage (1a) sont constitués par un bain à circulation de fluide, notamment du type huile silicone.

15. Calorimètre selon l'une des revendications 1 à 14, dans lequel tout le volume à l'intérieur (12) de la première enceinte est sous vide.

## Patentansprüche

1. Kalorimeter, welches zumindest einen Messensor (4), der eingerichtet ist zur Aufnahme zumindest einer Probe, sowie zumindest drei Stufen (1, 2, 3) der Temperaturregelung in absteigender Größe, welche jeweils eine Halterung (10, 20, 30) sowie Mittel zur Temperaturregelung aufweisen, wobei die Stufe der geringsten Größe zumindest einem Sensor (4) zugeordnet ist, aufweist, wobei
- eine erste Stufe (1) weiterhin eine Abschirmung (11) aufweist, welche mit der Halterung (10) der ersten Stufe eine erste Zelle bildet, wobei die erste Stufe dazu eingerichtet ist, in der Außenumgebung des Kalorimeters angeordnet zu sein, von welcher sie thermisch entkoppelt ist, und Mittel zur Temperaturregelung der ersten Stufe die Abschottung des Inneren (12) der ersten Zelle von den Temperaturschwankungen der Außenumgebung ermöglichen, aufweist,
- eine zweite Stufe (2) im Inneren (12) der ersten Zelle angeordnet ist, deren Halterung (20) thermisch mit der Halterung (10) der ersten Stufe mit ersten thermischen Leitern (23), bestehend aus Peltier-Elementen, gekoppelt ist,
- eine dritte Stufe (3) im Inneren der zweiten Zelle angeordnet ist, die gebildet ist durch die zweite Stufe und die thermisch mit der zweiten Stufe (2) durch zweite thermische Leiter (33) gekoppelt ist, wobei diese passiv sind und einen an eine Zeitkonstante angepassten Wert definieren, wobei die Mittel zur Temperaturregelung der dritten Stufe das Erfassen der für die Erfassung der Messwerte des zumindest einen Sensors notwendigen Temperaturwerte ermöglichen,
wobei die zweiten thermischen Leiter eine Zeitkonstante definieren, welche zwischen zehn Sekunden und mehreren hundert Sekunden liegt, bevorzugt um hundert Sekunden.

2. Kalorimeter nach Anspruch 1, wobei die ersten thermischen Leiter (23) Hochleistungs-Peltier-Elemente sind und Mittel zur Temperaturregelung der zweiten Stufe (2) darstellen.

3. Kalorimeter nach einem der Ansprüche 1 oder 2, wobei zwischen der Halterung (10) der ersten Stufe und der Halterung (20) der zweiten Stufe eine weitere erste Stufe (1a) angeordnet ist, welche thermisch von der ersten Stufe entkoppelt ist.

4. Kalorimeter nach einem der Ansprüche 1 bis 3, wobei zwischen der zweiten und dritten Stufe (2, 3) eine weitere zweite Stufe (2a) angeordnet ist.

5. Kalorimeter nach Anspruch 4, wobei die zweiten thermischen Leiter (33) zwischen der Halterung (20) der weiteren zweiten Stufe und der Halterung (20a) der weiteren zweiten Stufe (2a) angeordnet sind, und zwischen der Halterung (20a) der weiteren zweiten Stufe (2a) und der Halterung (30) der dritten Stufe (3) dritte thermische Leiter (23a) vorgesehen sind.

6. Kalorimeter nach Anspruch 4, wobei die zweiten thermischen Leiter (33) zwischen der Halterung (20a) der weiteren zweiten Stufe (2a) und der Halterung (30) der dritten Stufe (3) angeordnet sind und zwischen der Halterung (20) der zweiten Stufe (2) und der Halterung (20a) der weiteren zweiten Stufe (2a) dritte thermische Leiter (23a) vorgesehen sind.

7. Kalorimeter nach einem der Ansprüchen 5 oder 6, wobei die dritten thermischen Leiter (23a) eine konstante Leistung definieren, deren Wert in Abhängigkeit des zu analysierenden Probentyps gewählt wird.

8. Kalorimeter nach Anspruch 7, wobei die dritten thermischen Leiter (23a) Peltier-Elemente sind, welche eine Kältequelle für die Halterung (20a) oder die Halterung (30) bilden.

9. Kalorimeter nach einem der Ansprüche 1 bis 8, wobei die zweite Stufe (2) weiterhin ein Abschirmung (21) aufweist, welcher mit der Halterung (20) der zweiten Stufe eine zweite Zelle bildet, wobei im Inneren (22) der zweiten Zelle die dritte Stufe (3) und gegebenenfalls die weitere zweite Stufe (2a) angeordnet ist.

10. Kalorimeter nach den Ansprüchen 1 bis 9, wobei die dritte Stufe weiterhin eine Abschirmung (31) aufweist, welche mit der Halterung (30) der dritten Stufe eine weitere Zelle bildet, wobei im Inneren (32) der weiteren Zelle zumindest ein Sensor (4) angeordnet ist.

11. Kalorimeter nach den Ansprüchen 3 bis 10, wobei die weitere erste Stufe (1a) eine Halterung (10a) aufweist, die einer Abschirmung zugeordnet ist und eine Zelle bildet, in welcher die zweite Stufe, die dritte Stufe und gegebenenfalls die weitere zweite Stufe angeordnet sind.

12. Kalorimeter nach einem der Ansprüche 4 bis 11, wobei die weitere zweite Stufe (2a) einer Abschirmung (21a) zugeordnet ist und eine dritte Zelle bildet, in deren Inneren (22a) die dritte Stufe (3) angeordnet ist.

13. Kalorimeter nach einem der Ansprüche 1 bis 12, wobei die Mittel zur Temperaturregelung der ersten Stufe (1) durch ein Fluidzirkulationsbad gebildet sind, insbesondere durch ein Wasserzirkulationsbad.

14. Kalorimeter nach einem der Ansprüche 3 bis 13, wobei die Mittel zur Temperaturregelung der weiteren ersten Stufe (1a) durch ein Fluidzirkulationsbad gebildet sind, insbesondere durch ein Silikonölzirkulationsbad.

15. Kalorimeter nach einem der Ansprüche 1 bis 14, wobei das gesamte Volumen des Inneren (12) der ersten Zelle unter Vakuum steht.

## Claims

1. Calorimeter comprising at least one measurement sensor (4), intended to receive at least one sample, and at least three temperature regulation stages (1, 2, 3), of decreasing size, each comprising a support (10, 20, 30) and temperature regulation means, the smallest stage being combined with said at least one sensor (4), in which:
- a first stage (1) also comprises a screen (11) forming a first enclosure with the support (10) of this first stage, the latter being intended to be placed in the external environment of the calorimeter from which it is thermally decoupled, and the means for regulating the temperature of this first stage making it possible to isolate the inside (12) of the first enclosure from the temperature variations of said external environment,
- a second stage (2) is placed inside (12) said first enclosure and its support (20) is thermally coupled to the support (10) of the first stage by first thermal conductances (23) consisting of Peltier-effect elements,
- a third stage (3) is placed inside the second enclosure defined by the second stage and is thermally coupled to said second stage (2) by second thermal conductances (33), which are passive and define an adapted time constant value, the means for regulating the temperature of this third stage making it possible to obtain temperature values necessary for measurements to be obtained by said at least one sensor,
in which the second thermal conductances define a time constant comprised between ten seconds and several hundreds of seconds, for example of the order of approximately one hundred seconds.

2. Calorimeter according to claim 1, in which the first thermal conductances (23) are high-power Peltier-effect elements and constitute means for regulating the temperature of the second stage (2).

3. Calorimeter according to claim 1 or 2, in which a first other stage (1a), thermally decoupled from said first stage, is placed between the support (10) of the first stage and the support (20) of the second stage.

4. Calorimeter according to one of claims 1 to 3, in which a second other stage (2a) is placed between the second and third stages (2, 3).

5. Calorimeter according to claim 4, in which the second thermal conductances (33) are placed between the support (20) of the second stage and the support (20a) of the second other stage (2), third thermal conductances (23a) being provided between the support (20a) of the second other stage (2a) and the support (30) of the third stage (3).

6. Calorimeter according to claim 4, in which the second thermal conductances (33) are placed between the support (20a) of the second other stage (2a) and the support (30) of the third stage (3), third thermal conductances (23a) being provided between the support (20) of the second stage (2) and the support (20a) of the second other stage (2a).

7. Calorimeter according to claim 5 or 6, in which the third thermal conductances (23a) define a constant power, the value of which is selected as a function of the type of samples to be analyzed.

8. Calorimeter according to claim 7, in which said third thermal conductances (23a) are Peltier-effect elements defining a cold source for the support (20a) or the support (30).

9. Calorimeter according to one of claims 1 to 8, in which the second stage (2) also comprises a screen (21) forming a second enclosure with the support (20) of this second stage, inside (22) which is placed said third stage (3) and optionally said second other stage (2a).

10. Calorimeter according to claims 1 to 9, in which said third stage also comprises a screen (31) forming another enclosure with the support (30) of this third stage, inside (32) which is placed said at least one sensor (4).

11. Calorimeter according to claims 3 to 10, in which said first other stage (1a) comprises a support (10a) combined with a screen, forming an enclosure in which the second stage and the third stage and optionally said second other stage are placed.

12. Calorimeter according to one of claims 4 to 11, in which said second other stage (2a) is combined with a screen (21a) forming a third enclosure inside (22a) which said third stage (3) is placed.

13. Calorimeter according to one of claims 1 to 12, in which the temperature regulation means of said first stage (1) are constituted by a bath for circulating fluid, in particular water.

14. Calorimeter according to one of claims 3 to 13, in which the means for regulating the temperature of the first other stage (1a) are constituted by a bath for circulating fluid, in particular of the silicone oil type.

15. Calorimeter according to one of claims 1 to 14, in which the entire volume inside (12) the first enclosure is under vacuum.
